# FASCICULE DE BREVET EUROPEEN

(11) **EP 0 649 774 B1**
(45) Date de publication et mention de la délivrance du brevet: **13.08.1997**
(21) Numéro de dépôt: 94402289.6
(22) Date de dépôt: 12.10.1994
(51) Int. Cl.: B60Q 1/068

(54) **Dispositif pour immobiliser en rotation et sans jeu une vis de réglage d'un réflecteur de projecteur**
Einrichtung zum Festsetzen einer Schraube zur Steuerung der Neigung eines Scheinwerferreflektors
Device for fixing a screw for controlling the orientation of a headlight reflector

(30) Priorité: 15.10.1993 FR 9312280
(43) Date de publication de la demande: 26.04.1995
(73) Titulaire: VALEO VISION, 93000 Bobigny (FR)
(72) Inventeur: Billot, Gérard, F-93370 Montfermeil (FR)
(74) Mandataire: Martin, Jean-Jacques

(56) Documents cités:
- EP-A- 0 541 143

## Description

La présente invention concerne un dispositif pour immobiliser en rotation et sans jeu une vis de réglage d'un réflecteur de projecteur, notamment sur un véhicule automobile.

Un système répandu de réglage, que ce soit en direction ou en hauteur, pour la correction d'orientation du réflecteur, comprend une vis qui est en prise avec un écrou monté dans la paroi du boîtier du projecteur. L'écrou est immobilisé en translation, et guidé en rotation, dans la paroi. Des moyens de commande permettent de le faire tourner sur lui-même. La vis, au contraire, est axialement mobile en translation, mais est immobilisée en rotation. L'une de ses extrémités possède une tête bombée, par exemple hémisphérique, qui se loge dans une capsule concave de forme complémentaire solidaire du réflecteur. L'ensemble constitue une rotule d'articulation.

Ainsi, le mouvement en translation de la vis provoque, par l'intermédiaire de la capsule, une modification de l'orientation du réflecteur.

Un tel système est sujet à des déréglages inopinés et à l'apparition de jeux indésirables, qui sont dûs notamment aux vibrations. Il en résulte des frottements et de l'usure entre la tête de vis et sa capsule réceptrice.

La présente invention a pour objet d'éliminer ces phénomènes, en proposant un dispositif qui empêche tout déplacement de la vis autrement qu'en pure translation axiale, et qui assure un rattrapage des jeux, ce dispositif étant néanmoins d'une grande simplicité et d'un faible coût.

Le dispositif selon l'invention est destiné à immobiliser en rotation une vis de réglage d'un réflecteur de projecteur, cette vis étant axialement mobile en translation par rapport à la paroi du boîtier du projecteur.

Le dispositif est remarquable par le fait qu'il comprend au moins un élément, solidaire de la vis, qui est élastiquement déformable en direction radiale par rapport à l'axe de la vis, et que la paroi du boîtier est munie de moyens d'appui et de mise sous contrainte dudit élément, ces moyens étant ainsi conformés que leur engagement contre ledit élément élastiquement déformable assure l'immobilisation en rotation et sans jeu de la vis.

Par ailleurs, selon un certain nombre de caractéristiques avantageuses, mais non limitatives, de l'invention :
- l'élément élastiquement déformable est une languette ou une patte flexible ;
- la paroi du boîtier comprend une partie tubulaire dont la face interne porte lesdits moyens d'appui ;
- lesdits moyens d'appui consistent en une ou plusieurs protubérances, telles que des nervures ou des gaudrons ;
- lesdits moyens d'appui consistent en un repli de paroi de la partie tubulaire.

Dans un mode de réalisation de l'invention, la vis est munie d'au moins une paire de languettes flexibles s'étendant, à la manière des deux branches d'une fourche, parallèlement - ou à peu près parallèlement - à l'axe de la vis, et contenues approximativement dans un plan passant par cet axe, tandis que la paroi du boîtier comprend deux parties tubulaires sensiblement coaxiales qui portent chacune des moyens d'appui et de mise sous contrainte (à la flexion) de l'une des languettes.

Selon d'autres caractéristiques additionnelles possibles :
- les languettes, vues dans le plan qui les contient, convergent légèrement en direction de leurs extrémités libres ;
- les languettes, vues en projection dans un plan qui est orthogonal au plan les contenant, et est parallèle à l'axe de la vis, divergent légèrement en direction de leurs extrémités libres;
- les extrémités des languettes sont biseautées ;
- la languette externe est adaptée pour venir en appui par l'une de ses faces latérales contre un élément d'appui porté par la partie tubulaire extérieure, tandis que la languette interne est adaptée pour venir en appui par sa face latérale située du côté opposé contre un élément d'appui porté par la partie tubulaire intérieure ;
- l'écartement mutuel suivant une direction circonférentielle des éléments d'appui externe et interne correspond sensiblement à l'épaisseur des languettes, de sorte qu'après montage elles s'inscrivent dans le même plan radial ;
- les languettes externe et interne viennent porter, respectivement, l'une par son chant externe contre la paroi interne de la partie tubulaire extérieure et l'autre, par son chant interne, contre la paroi externe de la partie tubulaire intérieure, ce qui provoque au montage leur rapprochement mutuel par effet de pincement ;
- l'une au moins des languettes est munie à son extrémité libre d'un bossage par lequel elle vient porter contre la paroi de la partie tubulaire qui lui est associée ;
- la vis est pourvue de deux paires de languettes flexibles identiques disposées symétriquement de part et d'autre de son axe ;
- la partie de boîtier tubulaire intérieure constitue un fourreau à l'intérieur duquel est guidé en rotation et immobilisé en translation un écrou de commande, dans lequel la vis de réglage est en prise.

Dans un autre mode de réalisation de l'invention, les éléments élastiquement déformables consistent en un ensemble de quatre pattes flexibles identiques, de section carrée, qui prolongent l'extrémité libre de la vis, sensiblement parallèlement à son axe, et symétriquement par rapport à ce dernier, les faces internes de ces pattes étant séparées par des espaces qui autorisent leur rapprochement mutuel par flexion élastique.

Selon un certain nombre de caractéristiques additionnelles possibles :
- la paroi du boîtier comprend une partie tubulaire - ou manchon - de section transversale approximativement carrée, dans laquelle s'engage, avec mise sous contrainte à la flexion, l'ensemble constitué par lesdites quatre pattes flexibles ;
- la face interne de la partie tubulaire est munie d'une série de gaudrons longitudinaux venant en appui contre les pattes ;
- à chaque angle de la partie tubulaire est prévue une paire de gaudrons situés chacun sur l'une des faces de l'angle, à égale distance de celui-ci, et adaptés pour venir s'appliquer contre les deux faces externes de la même patte ;
- les quatre pattes divergent légèrement vers leurs extrémités libres, de manière symétrique par rapport à l'axe de la vis ;
- les faces externes des pattes sont biseautées à leur extrémité libre ;
- les arêtes externes des pattes sont chanfreinées ;
- la partie tubulaire débouche dans une partie en forme de fourreau, à l'intérieur de laquelle est guidé en rotation et immobilisé en translation un écrou de commande dans lequel la vis de réglage est en prise.

D'autres caractéristiques et avantages de l'invention apparaîtront de la description et des dessins annexés, qui en représentent des modes de réalisation préférentiels.

Sur ces dessins :
- la figure 1 est une vue en coupe axiale, selon le plan brisé I-I de la figure 2, d'un dispositif faisant l'objet d'un premier mode de réalisation de l'invention ;
- la figure 2 est une vue en coupe transversale correspondant au plan de section II-II de la figure 1 ;
- les figures 3, 4 et 5 sont des vues de la vis de réglage, et des éléments déformables solidaires de cette vis, respectivement de face, de dessus et en perspective ;
- la figure 6 est une vue de face représentant une variante de l'ensemble vis - éléments déformables des figures 2 à 5 ;
- la figure 7 est une vue similaire à la figure 2, qui représente une variante de la paroi du boîtier ;
- la figure 8 est une vue de face d'une vis de réglage constitutive d'un second mode de réalisation du dispositif selon l'invention ;
- la figure 9 est une vue en coupe transversale selon le plan IX-IX de la figure 8 ;
- la figure 10 est une vue en perspective de la partie d'extrémité de cette vis ;
- la figure 11 est une vue en coupe axiale de la partie du boîtier de projecteur destinée à recevoir la vis des figures 8 à 10 ;
- la figure 12 est une vue en section transversale selon le plan XII-XII de la figure 11 ;
- la figure 13 est une vue en coupe axiale de l'ensemble du dispositif faisant l'objet du second mode de réalisation ;
- la figure 14 est une section transversale représentant une variante de l'extrémité de la vis.

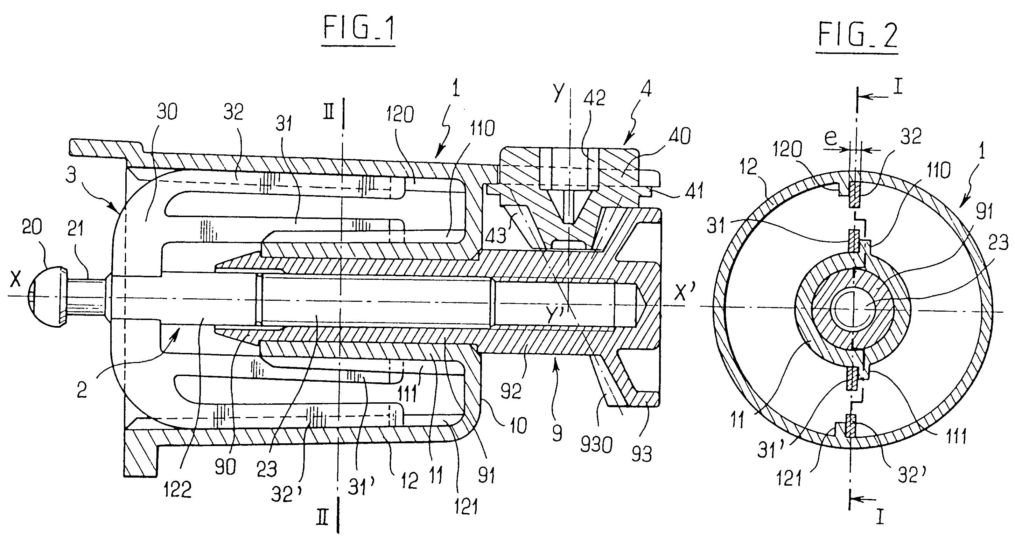

Dans le dispositif représenté aux figures 1 et 2, on a désigné par la référence 1 une partie de la paroi du boîtier d'un projecteur automobile, par la référence 2 une vis de réglage - en direction ou en hauteur - du réflecteur (non représenté) de ce projecteur, par la référence 9 l'écrou avec lequel la vis 2 est en prise, et par la référence 4 les moyens de commande en rotation de l'écrou.

La paroi du boîtier comprend essentiellement deux parties tubulaires coaxiales, de forme générale cylindrique, l'une intérieure 11 et l'autre extérieure 12. La partie intérieure 11 est plus courte que la partie extérieure 12.

En fait, la partie extérieure 12 est légèrement conique, cette conicité correspondant à des dépouilles de démoulage.

De même, la partie intérieure 11 est légèrement conique sur sa face externe.

Ainsi, la partie 12 a une dépouille positive tandis que la partie 11 a une dépouille négative. En revanche, la paroi intérieure de la partie 11 est cylindrique. Cette partie constitue un fourreau qui assure le guidage en rotation de l'écrou 9, et son blocage en direction axiale.

L'écrou 9 possède une partie principale 91, également cylindrique, qui vient en correspondance avec l'alésage de la partie 11. L'écrou est immobilisé en translation sur cette partie 11, d'une part par une partie de plus grand diamètre 92, d'autre part par une zone d'extrémité élastiquement déformable 90, également de plus grand diamètre dans sa position déployée représentée à la figure 1.

Ainsi, l'écrou se met en place dans la partie 11 par clipsage élastique.

La partie 92, qui se trouve à l'extérieur du boîtier du projecteur, possède une tête 93 qui constitue un pignon conique, dont les dents sont référencées 930.

Un organe de commande 4, qui possède également un pignon conique 43 venant en prise avec le pignon 93 est guidé en rotation dans la paroi du boîtier 1.

L'organe 4 est retenu dans une ouverture de la paroi par un épaulement 41. Sa partie principale 40 porte une empreinte 42 accessible par un outil approprié, tel qu'une clé alène.

L'axe de la partie tubulaire 11 - qui est également l'axe de l'écrou 9 - est référencé XX'. L'axe de rotation de l'organe 4, perpendiculaire à l'axe XX', est référencé YY'.

A la simple observation de la figure 1, on comprend qu'en faisant tourner l'organe de commande autour de l'axe YY', dans un sens ou dans l'autre, on va faire tourner également sur lui-même, autour de l'axe XX', l'écrou 9, dans un sens ou dans l'autre.

La vis 2 possède une partie principale filetée 23 qui vient en prise dans le trou taraudé de l'écrou 9.

La vis 2 possède également une partie lisse cylindrique 22, et une tête 20 qui se raccorde à la partie 22 par une partie cylindrique de plus petit diamètre.

La tête 20 est une tête hémisphérique, apte à venir se loger dans une capsule non représentée solidaire du réflecteur.

La partie de vis 22 est solidaire d'une pièce 3 destinée à immobiliser la vis en rotation, et à supprimer les jeux.

La pièce 3 est une pièce mince, du genre plaquette, qui s'étend radialement, c'est-à-dire dans un plan contenant l'axe XX' de la vis, symétriquement de chaque côté de celle-ci.

La pièce est découpée de telle façon qu'elle affecte, de chaque côté de la vis, la forme générale d'une fourche dont les deux branches s'étendent à peu près parallèlement à l'axe XX'.

On a désigné par les références 31 et 32 les branches respectivement interne et externe de l'une des deux fourches, et par les références 31', 32' les branches de l'autre fourche.

La base des fourches, par laquelle elles se raccordent à la partie de vis 22, est référencée 30.

La pièce 3 peut être une pièce rapportée sur la vis, et fixée à celle-ci par des moyens appropriés, par exemple par soudage.

Elle peut également former partie intégrante de la vis, l'ensemble étant par exemple une pièce monobloc en matière plastique, réalisée par moulage.

Les branches 31, 32 et 31', 32' de chacune des fourches forment des languettes minces, de longueur identique.

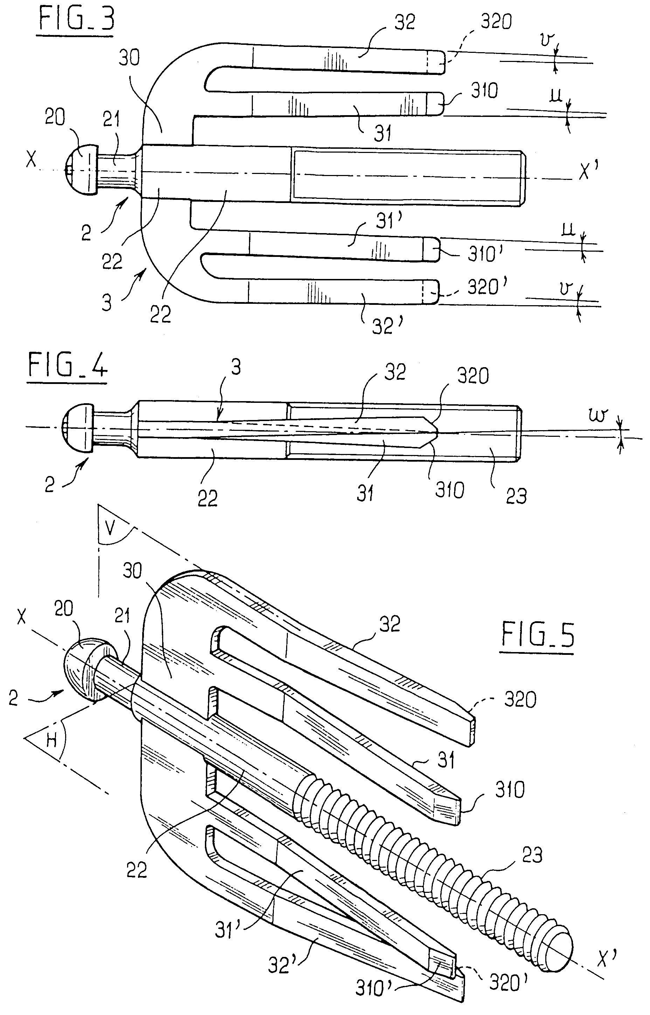

Comme on le voit plus particulièrement à la figure 3, elles convergent l'une vers l'autre en direction de leurs extrémités libres (dans la direction opposée à la partie commune 30), les languettes internes 31, 31' formant un angle divergent u de faible valeur avec la direction longitudinale XX', et les languettes externes 32, 32' formant, au contraire, un angle v légèrement convergent par rapport à cet axe.

A la figure 5 on a désigné par la référence V le plan passant par XX' qui contient (approximativement) la pièce 3, et par la référence H un plan orthogonal au plan V, qui passe également par XX'.

Comme on le voit plus particulièrement aux figures 4 et 5, lorsque les languettes 31 et 32 (ainsi que 31' et 32') sont vues dans le plan H, elles divergent légèrement en direction de leurs extrémités libres.

A la figure 4, on a désigné par la référence w l'angle (de faible valeur) que forme chaque languette par rapport à la direction XX'.

La zone d'extrémité de chacune des languettes 31-32 et 31'-32' présente, sur sa face latérale située du côté vers lequel elles divergent, un chanfrein 310-320, respectivement 310', 320', qui forme un bord biseauté.

Comme on le voit à la figure 2, la paroi externe de la partie intérieure 11 est munie d'une paire de nervures longitudinales 110, 111.

De manière similaire, la paroi interne de la partie extérieure 12 est munie d'une paire de nervures longitudinales 120, 121.

Les nervures 110 et 111 sont, à un léger décalage près, orientées radialement et diamétralement opposées.

De la même façon, à un léger décalage près, les deux nervures 120 et 121 sont orientées radialement et diamétralement opposées.

Ce décalage est tel qu'il permet d'insérer une paire de fourches 31, 32 dans l'espace annulaire séparant les parties 11 et 12, de telle sorte que la languette 32 vienne, par l'une de ses faces latérales s'appliquer contre la nervure 120, tandis que la languette 31 vient, par sa face latérale opposée, s'appliquer contre la nervure 110.

De la même manière, les languettes 31' et 32' viennent respectivement s'appuyer par l'une de leurs faces latérales contre les nervures 111, respectivement 121.

L'écartement mutuel selon une direction circonférentielle des nervures 110, 120 d'une part et 111, 121 d'autre part est choisi pour correspondre à l'épaisseur e de la pièce 3 (et des languettes).

La convergence u + v de chaque paire de languettes est choisie pour être légèrement plus faible que la convergence des dépouilles des parties 11 et 12.

Lorsque la pièce 3 est insérée entre ces deux parties, chacune des languettes vient porter par l'un de ses chants contre la paroi d'une partie tubulaire 11 ou 12. On observe donc un pincement de chaque paire de languettes 31, 32 et 31', 32', et chacune des languettes est mise sous contrainte à la flexion radiale (vers l'axe XX').

Les languettes se déforment également à la flexion, perpendiculairement au plan V car, venant en appui contre les nervures 110, 120 d'une part et 111, 121 d'autre part, chaque paire de languettes est déformée pour venir occuper le même plan, dans la position illustrée à la figure 2.

La présence des chanfreins 320, 310 et 320', 310' facilite la phase initiale de cette insersion.

Lorsque l'ensemble constitué par la vis 2 et la pièce 3 est correctement en place dans le dispositif, comme cela est représenté aux figures 1 et 2, on observe donc une immobilisation totale de la vis en rotation, les nervures 110, 120 et 111, 121 emprisonnant les deux paires de languettes et empêchant ainsi toute rotation de la pièce 3, et corrélativement de la vis 2, autour de l'axe XX'.

Par ailleurs, la pièce 3 étant sous précontrainte élastique, aussi bien radialement que tangentiellement, toute possibilité de jeu de la vis par rapport à l'écrou 9 est évité; en effet, en cas d'apparition d'un jeu, celui-ci est immédiatement compensé par la déformation des languettes.

Ce montage n'interdit pas, bien sûr, la commande du réglage. Celui-ci est réalisé par manoeuvre de la pièce de commande 4 en rotation autour de l'axe YY'. Ce mouvement est transmis à l'écrou 9 par les pignons coniques. La rotation de l'écrou 9 commande le déplacement axial de la vis de réglage 2.

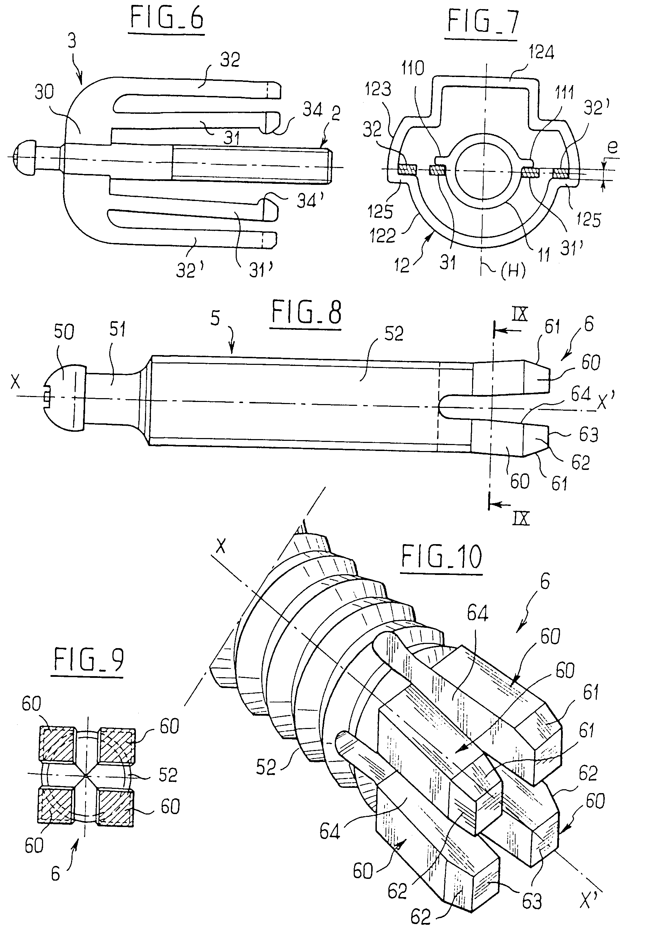

La figure 6 montre une variante de la vis 2 et de la pièce 3.

Dans cette variante, les branches extérieures 32 et 32' des fourches s'étendent parallèlement à l'axe de la vis.

L'effet de pincement résulte donc de la coopération de cette branche avec la paroi interne, légèrement conique, de la partie tubulaire extérieure.

Les branches internes 31 et 31' ont la même inclinaison que dans le mode de réalisation déjà décrit.

L'extrémité libre de ces branches 31, 31' présente un bossage dirigé radialement vers l'intérieur, référencé 34, respectivement 34'. C'est ce bossage qui vient en appui contre la paroi externe de la partie cylindrique intérieure.

La figure 7 représente une variante de la paroi du boîtier. La partie tubulaire intérieure 11 est tout à fait similaire à celle du mode de réalisation précédent. Elle possède des nervures longitudinales 110, 111 contre lesquelles viennent s'appliquer les branches intérieures 31, 31'.

La partie tubulaire extérieure 12 a une section de forme particulière. Elle est composée d'une partie principale semi-cylindrique 122, de deux parties 123 en arc de cylindre disposées symétriquement par rapport à un plan axial H, d'une partie en forme de U 124. Les parties en arc de cylindre 122 et 123 sont reliées par des replis 125 qui jouent le même rôle que les nervures 120 et 121 du premier mode de réalisation, ces replis servant d'appui aux languettes externes 32 et 32'.

La vis 5 qui équipe le deuxième mode de réalisation du dispositif de l'invention est représentée aux figures 8, 9 et 10 ; elle comprend une partie principale filetée 52, une tête 50 qui se raccorde à la tige filetée 52 par une portion lisse de plus petit diamètre 51, ainsi qu'un ensemble élastiquement déformable 6 qui forme l'extrémité de la vis opposée à la tête 50.

L'ensemble déformable 6 est constitué par quatre pattes flexibles identiques 60, de section carrée, qui prolongent l'extrémité libre de la vis sensiblement parallèlement à son axe XX', et symétriquement par rapport à ce dernier.

Les faces internes de ces pattes 60 sont séparées par des espaces longitudinaux 64 dont la largeur est suffisante pour autoriser le rapprochement mutuel des pattes.

On a désigné par la référence 63 les faces frontales des pattes 60 ; leurs faces externes sont biseautées dans leur zone d'extrémité libre, formant ainsi des chanfreins 61, 62.

Comme on le voit nettement à la figure 8, les quatre pattes 60 divergent légèrement en direction de leurs extrémités libres (vers la droite de la figure 8), ceci de manière symétrique par rapport à XX'.

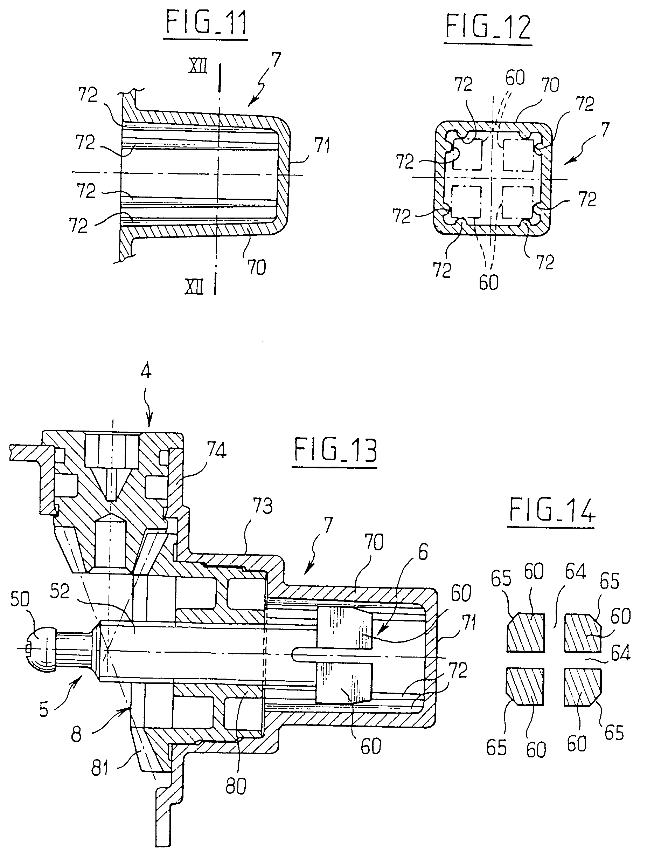

Les figures 11 et 12 représentent une partie de la paroi de boîtier 7 destinée à recevoir la vis 5, et plus précisément l'ensemble déformable 6 qui forme l'extrémité de cette dernière.

La partie de paroi 7 comprend un manchon 70 fermé par un fond 71, dont la section droite est carrée, à coins arrondis. Les parois du manchon 70 divergent légèrement en direction de son embouchure, cette divergence correspondant à une dépouille de démoulage.

Au voisinage de chaque angle est prévue une paire de gaudrons 72. Chaque gaudron consiste en un bossage semi-cylindrique, qui s'étend longitudinalement, parallèlement à l'axe du manchon 70. Les deux gaudrons de chaque paire sont disposés symétriquement chacun sur l'une des faces de l'angle, à égale distance de celui-ci.

Les gaudrons 72 ont une épaisseur qui croît légèrement depuis le fond 71 vers l'embouchure du manchon, de manière à compenser la divergence de la paroi du manchon. Ainsi, la génératrice la plus intérieure de chaque gaudron est sensiblement parallèle à l'axe du manchon.

Le dimensionnement du manchon et de ses gaudrons est choisi de telle manière que l'ensemble déformable 6 puisse y être inséré avec mise sous précontrainte à la flexion des pattes élastiques 60.

Ainsi, chacune des pattes 60 (dont le contour est représenté en traits interrompus mixtes à la figure 12) vient en contact par ses faces externes contre une paire de gaudrons d'angle 72.

Cette contrainte demeure inchangée quel que soit le degré d'enfoncement des pattes à l'intérieur du manchon 70.

La figure 13 montre l'ensemble du dispositif.

Le manchon 70 débouche dans un fourreau coaxial 73 de plus grande dimension. Le fourreau 73 a une forme générale cylindrique, dans la paroi duquel est guidé en rotation un écrou 8.

La vis 5 est en prise dans la partie taraudée 80 de l'écrou 8. Ce dernier possède une partie 81 qui constitue un pignon conique avec lequel coopère le pignon conique d'un organe de manoeuvre 4 similaire à celui qui a été décrit en référence au premier mode de réalisation. L'organe de manoeuvre 4 est convenablement retenu et guidé en rotation dans une partie 74 de la paroi du boîtier.

Comme dans le premier mode de réalisation, la mise en rotation de l'organe de manoeuvre 4 fait tourner l'écrou 8, ce qui entraîne le déplacement en translation axiale de la vis 5. Ce déplacement va entraîner une modification de l'orientation du réflecteur (non représenté) par l'intermédiaire de la tête de vis 50.

Du fait de la présence des gaudrons 72 et de la forme carrée de l'ensemble 6, toute rotation de la vis 5 est interdite. Seul un mouvement purement axial est possible.

Par ailleurs, du fait que chacune des pattes 60 se trouve sous contrainte, aussi bien radialement que tangentiellement, tout jeu est interdit à la vis dans n'importe quelle direction. En cas d'apparition d'un jeu, celui-ci est automatiquement compensé.

Les frottements indésirables entre la tête de vis 50 et la capsule (non représentée) qui la retient se trouvent donc ainsi évités.

La présence des biseaux 61, 62 favorise la mise en place de la partie 6 dans le manchon 70.

Additionnellement, les arêtes externes des pattes 60 peuvent être chanfreinées pour former des faces biseautées 65, comme cela est représenté à la figure 14.

On notera pour terminer que le dispositif de rattrapage de jeu utilisé dans le mode de réalisation des figures 1 à 7 peut être utilisé dans le mode de réalisation des figures 8 à 14, et réciproquement.

## Revendications

1. Dispositif pour immobiliser en rotation et sans jeu une vis (2 ; 5) de réglage d'un réflecteur de projecteur, cette vis (2 ; 5) étant axialement mobile en translation par rapport à la paroi (1 ; 7) du boîtier du projecteur, caractérisé par le fait qu'il comprend au moins un élément (31, 32 ; 60) solidaire de la vis (2 ; 5), qui est élastiquement déformable en direction radiale par rapport à l'axe (XX') de la vis (2 ; 5), et que la paroi (1 ; 7) du boîtier est munie de moyens d'appui (110-111, 120-121 ; 125 ; 72) et de mise sous contrainte dudit élément, ainsi conformés que leur engagement contre ledit élément élastiquement déformable (31, 32 ; 60) assure l'immobilisation en rotation et sans jeu de ladite vis (2 ; 5).

2. Dispositif selon la revendication 1, caractérisé par le fait que ledit élément élastiquement déformable est une languette (31, 32) ou une patte (60) flexible.

3. Dispositif selon la revendication 2, caractérisé par le fait que la paroi (1 ; 7) du boîtier comprend une partie tubulaire (12 ; 7) dont la face interne porte lesdits moyens d'appui (120-121, 125 ; 72).

4. Dispositif selon la revendication 3, caractérisé par le fait que lesdits moyens d'appui consistent en une ou plusieurs protubérances telles que des nervures (120-121) ou des gaudrons (72).

5. Dispositif selon la revendication 3, caractérisé par le fait que lesdits moyens d'appui consistent en un repli de paroi (125) de la partie tubulaire.

6. Dispositif selon la revendication 2, caractérisé par le fait que la vis (2) est munie d'au moins une paire de languettes flexibles (31, 32) s'étendant, à la manière des branches d'une fourche, parallèlement - ou à peu près parallèlement - à l'axe (XX') de la vis, et contenues approximativement dans un plan (V) passant par cet axe (XX'), tandis que la paroi (1) du boîtier comprend deux parties tubulaires sensiblement coaxiales (11, 12) qui portent chacune des moyens d'appui (110, 120) et de mise sous contrainte à la flexion de l'une des languettes (31, 32).

7. Dispositif selon la revendication 6, caractérisé par le fait que, vues dans ledit plan (V) contenant les languettes (31, 32), celles-ci convergent légèrement en direction de leurs extrémités libres.

8. Dispositif selon la revendication 6 ou 7, caractérisé par le fait que, vues en projection dans un plan (H) qui est orthogonal audit plan (V) contenant les languettes (31, 32), et parallèle à l'axe (XX') de la vis, ces languettes divergent légèrement en direction de leurs extrémités libres.

9. Dispositif selon l'une des revendications 6 à 8, caractérisé par le fait que les extrémités libres (310, 320) des languettes sont biseautées.

10. Dispositif selon l'une des revendications 6 à 9, caractérisé par le fait que la languette externe (32) est adaptée pour venir en appui par l'une de ses faces latérales contre un élément d'appui (120, 125) porté par la partie tubulaire extérieure (12) tandis que la languette interne (31) est adaptée pour venir en appui par sa face latérale située du côté opposé contre un élément d'appui (110) porté par la partie tubulaire intérieure (11).

11. Dispositif selon les revendications 8 et 10 prises en combinaison, caractérisé par le fait que l'écartement mutuel (e) suivant une direction circonférentielle des éléments d'appui externe (120) et interne (110) correspond sensiblement à l'épaisseur des languettes (31, 32) de sorte qu'après montage elles s'inscrivent dans le même plan radial (V).

12. Dispositif selon l'une des revendications 6 à 11, caractérisé par le fait que lesdites languettes externe (32) et interne (31) viennent porter, respectivement, l'une (32) par son chant externe contre la paroi interne de la partie tubulaire extérieure (12) et l'autre, par son chant interne, contre la paroi externe de la partie tubulaire intérieure (11), ce qui provoque au montage leur rapprochement mutuel par effet de pincement.

13. Dispositif selon la revendication 12, caractérisé par le fait que l'une au moins (31) des languettes est munie à son extrémité libre d'un bossage (34) par lequel elle vient porter contre la paroi de la partie tubulaire (11) qui lui est associée.

14. Dispositif selon l'une des revendications 6 à 13, caractérisé par le fait que la vis (2) est pourvue de deux paires de languettes flexibles identiques (31-32, 31'-32') disposées symétriquement de part et d'autre de son axe (XX').

15. Dispositif selon l'une des revendications 6 à 14, caractérisé par le fait que la partie de boîtier tubulaire intérieure (11) constitue un fourreau à l'intérieur duquel est guidé en rotation et immobilisé en translation un écrou de commande (9), dans lequel la vis de réglage (2) est en prise.

16. Dispositif selon l'une des revendications 1 à 5, caractérisé par le fait que lesdits éléments élastiquement déformables consistent en un ensemble (6) de quatre pattes flexibles identiques (60), de section carrée, qui prolongent l'extrémité libre de la vis (5), sensiblement parallèlement à son axe XX', et symétriquement par rapport à ce dernier, les faces internes de ces pattes (60) étant séparées par des espaces (64) qui autorisent leur rapprochement mutuel par flexion élastique.

17. Dispositif selon la revendication 16, caractérisé par le fait que la paroi (7) du boîtier comprend une partie tubulaire (70) de section transversale approximativement carrée, dans laquelle s'engagent avec mise sous contrainte à la flexion, l'ensemble (6) de pattes (60).

18. Dispositif selon la revendication 17, caractérisé par le fait que la face interne de la partie tubulaire (70) est munie d'une série de gaudrons longitudinaux (72) venant en appui contre les pattes (60).

19. Dispositif selon la revendication 18, caractérisé par le fait qu'à chaque angle de la partie tubulaire est prévue une paire de gaudrons (72) situés chacun sur l'une des faces de l'angle, à égale distance de celui-ci, et adaptés pour venir s'appliquer contre les deux faces externes de la même patte (60).

20. Dispositif selon l'une des revendications 16 à 19, caractérisé par le fait que les quatre pattes (60) divergent légèrement vers leurs extrémités libres, de manière symétrique par rapport à l'axe (XX') de la vis.

21. Dispositif selon l'une des revendications 16 à 20, caractérisé par le fait que les faces externes des pattes (60) sont biseautées à leur extrémité libre.

22. Dispositif selon l'une des revendications 16 à 21, caractérisé par le fait que les arêtes externes des pattes (60) sont chanfreinées.

23. Dispositif selon l'une des revendications 17 à 19, caractérisé par le fait que ladite partie tubulaire (70) débouche dans une partie (73) en forme de fourreau à l'intérieur de laquelle est guidé en rotation et immobilisé en translation un écrou de commande (8) dans lequel la vis de réglage (5) est en prise.

## Claims

1. A device for immobilising in rotation, and without play, a screw (2 ; 5) for adjusting a headlamp reflector, the said screw (2 ; 5) being axially movable in translation relative to the wall (1 ; 7) of the headlamp casing, characterized in that it comprises at least one element (31, 32 : 60), permanently fixed to the screw (2 ; 5), which is resiliently deformable in the radial direction relative to the axis (XX') of the screw (2 ; 5), and in that the wall (1 ; 7) of the casing is equipped with means (110-111, 120-121 ; 125 ; 72) for bearing against and constraining the said element the means being shaped so that their engagement with the said resiliently deformable element (31, 32 ; 60) ensures the immobilisation in rotation, without play, of the said screw (2 ; 5).

2. A device according to claim 1, characterized in that the said resiliently deformable element is a flexible tongue (31, 32) or lug (60).

3. A device according to claim 2, characterized in that the wall (1 ; 7) of the casing comprises a tubular part (12 ; 7) the internal surface of which carries the said bearing means (120-121, 125 ; 72).

4. A device according to claim 3, characterized in that the said bearing means consist of one or several protuberances such as ribs (120-121) or curved ridges (72).

5. A device according to claim 3, characterized in that the said bearing means consist of a fold in the wall (125) of the tubular part.

6. A device according to claim 2, characterized in that the screw (2) is equipped with at least one pair of flexible tongues (31, 32) extending like prongs of a fork parallel to - or almost parallel to - the axis (XX') of the screw and contained approximately in a plane (V) through which the said axis (XX') passes, whilst the wall (1) of the casing comprises two substantially coaxial tubular parts (11, 12) each of which comprises means (110, 120) for bearing against and constraining by flexion one of the tongues (31, 32).

7. A device according to claim 6, characterized in that, seen in the said plane (V) containing the tongues (31, 32), the latter converge slightly in the direction towards their free ends.

8. A device according to claim 6 or claim 7, characterized in that, seen in projection in a plane (H), which is orthogonal to the said plane (V) containing the tongues (31, 32) and parallel to the axis (XX') of the screw, the said tongues diverge slightly in the direction towards their free ends.

9. A device according to any one of claims 6 to 8, characterized in that their free ends are tapered.

10. A device according to any one of claims 6 to 9, characterized in that the external tongue (32) is adapted to come to bear by one of its lateral surfaces against a bearing element (120, 125) carried by the external tubular part (12) whereas the internal tongue (31) is adapted to come to bear by its lateral surface situated on the opposite side against a bearing element (110) carried by the internal tubular part (11).

11. A device according to claims 8 and 10 taken together, characterized in that the mutual separation (e) in a circumferential direction of the external (120) and internal (110) bearing elements corresponds substantially to the thickness of the tongues (31, 32) in such a manner that after assembly they are positioned in the same radial plane (V).

12. A device according to any one of claims 6 to 11, characterized in that the said external tongue (32) and internal tongue (31) come to bear, respectively, the one (32), by its external edge, against the internal wall of the external tubular part (12) and the other, by its internal edge, against the external wall of the internal tubular part (11), and this causes them to come closer together on assembly as a result of a squeezing effect.

13. A device according to claim 12, characterized in that at least one (31) of the tongues is equipped at its free end with a boss (34) by means of which it comes to bear against the wall of the tubular part (11) associated with it.

14. A device according to any one of claims 6 to 13, characterized in that the screw (2) is equipped with two identical pairs of flexible tongues (31-32, 31'-32') arranged symmetrically on either side of its axis (XX').

15. A device according to any one of claims 6 to 14, characterized in that the internal tubular part (11) of the casing constitutes a sleeve inside which a control nut (9) is guided in rotation and immobilised in translation and the adjustment screw (2) engages in the said nut.

16. A device according to any one of claims 1 to 5, characterized in that the said resiliently deformable elements consist of a set (6) of four identical flexible lugs (60), having a square cross-section, which prolong the free end of the screw (5) substantially parallel to its axis (XX'), and symmetrically relative to the latter, the internal faces of these lugs (60) being separated by gaps (64) which allow them to come towards one another by resilient flexion.

17. A device according to claim 16, characterized in that the wall (7) of the casing comprises a tubular portion (70) having an approximately square cross-section in which the set (6) of lugs (60) engage and are constrained by flexion.

18. A device according to claim 17, characterized in that the internal surface of the tubular portion (70) is equipped with a series of longitudinal curved ridges (72) which come to bear against the said lugs (60).

19. A device according to claim 18, characterized in that a pair of curved ridges (72) is provided at each angle of the tubular portion, each ridge being located on one of the faces of the angle, at equal distances from the latter, and adapted to come to bear against the two external faces of the same lug (60).

20. A device according to any one of claims 16 to 19, characterized in that the four lugs (60) diverge slightly towards their free ends in a symmetrical manner relative to the axis (XX') of the screw.

21. A device according to any one of claims 16 to 20, characterized in that the external surfaces of the lugs (60) are tapered at their free ends.

22. A device according to any one of claims 16 to 21, characterized in that the external edges of the lugs (60) are chamfered.

23. A device according to any one of claims 17 to 19, characterized in that the said tubular portion (70) opens out into a part (73) in the form of a sleeve inside which a control nut (8), in which the adjustment screw (5) engages, is guided in rotation and immobilised in translation.

## Patentansprüche

1. Einrichtung zum Festsetzen einer Schraube (2; 5) zur Einstellung eines Scheinwerferreflektors, wobei diese Schraube (2; 5) im Verhältnis zur Wand (1; 7) des Scheinwerfergehäuses axial geradlinig beweglich ist , **dadurch gekennzeichnet**, daß sie mindestens ein fest mit der Schraube (2; 5) verbundenes Element (31, 32; 60) umfaßt, das im Verhältnis zur Achse (XX') der Schraube (2; 5) in radialer Richtung elastisch verformbar ist, und daß die Wand (1; 7) des Gehäuses mit Mitteln (110-111, 120-121; 125; 72) zur Auflage und Beanspruchung des besagten Elements versehen ist, die so gestaltet sind, daß ihr Eingreifen an dem besagten elastisch verformbaren Element (31, 32; 60) die spielfreie Drehsicherung der besagten Schraube (2; 5) herbeiführt.

2. Einrichtung nach Anspruch 1 , **dadurch gekennzeichnet,** daß das besagte elastische Element eine biegsame Zunge (31, 32) oder ein biegsamer Ansatz (60) ist.

3. Einrichtung nach Anspruch 2 , **dadurch gekennzeichnet,** daß die Wand (1; 7) des Gehäuses einen rohrförmigen Teil (12; 7) umfaßt, dessen Innenfläche die besagten Auflagemittel (120-121, 125; 72) trägt.

4. Einrichtung nach Anspruch 3 **, dadurch gekennzeichnet,** daß die besagten Auflagemittel aus einer oder mehreren Ausstülpungen, etwa aus Rippen (120-121) oder Stegen (72), bestehen.

5. Einrichtung nach Anspruch 3 , **dadurch gekennzeichnet,** daß die besagten Auflagemittel aus einer Wandbiegung (125) des rohrförmigen Teils bestehen.

6. Einrichtung nach Anspruch 2 , **dadurch gekennzeichnet,** daß die Schraube (2) mit mindestens einem Paar biegsamer Zungen (31, 32) versehen ist, die sich wie die zwei Schenkel einer Gabel parallel - bzw. in etwa parallel - zur Achse (XX') der Schraube erstrecken und annähernd in einer Ebene (V) enthalten sind, die durch diese Achse (XX') verläuft, während die Wand (1) des Gehäuses zwei in etwa koaxiale rohrförmige Teile (11, 12) umfaßt, die jeweils Mittel (110, 120) zur Auflage und Biegebeanspruchung einer der Zungen (31, 32) tragen.

7. Einrichtung nach Anspruch 6 , **dadurch gekennzeichnet,** daß die Zungen (31, 32), in der besagten sie enthaltenden Ebene (V) gesehen, in Richtung ihrer freien Enden leicht zusammenlaufen.

8. Einrichtung nach Anspruch 6 oder 7 , **dadurch gekennzeichnet,** daß die Zungen (31, 32), in einer Projektionsebene (H) gesehen, die rechtwinklig zu der sie enthaltenden Ebene (V) und parallel zur Achse (XX') der Schraube verläuft, in Richtung ihrer freien Enden leicht auseinanderlaufen.

9. Einrichtung nach einem der Ansprüche 6 bis 8, **dadurch gekennzeichnet,** daß die freien Enden (310, 320) der Zungen abgeschrägt sind.

10. Einrichtung nach einem der Ansprüche 6 bis 8, **dadurch gekennzeichnet,** daß die äußere Zunge (32) angepaßt ist, um mit einer ihrer Seitenflächen an einem am äußeren rohrförmigen Teil (12) angebrachten Auflageelement (120, 125) zur Auflage zu kommen, während die innere Zunge (31) angepaßt ist, um mit ihrer auf der gegenüberliegenden Seite angeordneten Seitenfläche an einem am inneren rohrförmigen Teil (11) angebrachten Auflageelement (110) zur Auflage zu kommen.

11. Einrichtung nach den Ansprüchen 8 und 10 in Kombination, **dadurch gekennzeichnet**, daß die wechselseitige Entfernung (e) entlang einer Umfangsrichtung der äußeren (120) und inneren (110) Auflageelemente in etwa der Dicke der Zungen (31, 32) entspricht, so daß sie nach dem Einbau in der gleichen radialen Ebene (V) enthalten sind.

12. Einrichtung nach einem der Ansprüche 6 bis 11, **dadurch gekennzeichnet,** daß die äußeren (32) und inneren (31) Zungen jeweils, die eine (32) mit ihrer Außenkante an der Innenwand des äußeren rohrförmigen Teils (12) und die andere mit ihrer Innenkante an der Außenwand des inneren rohrförmigen Teils (11) anliegen, was beim Einbau ihre wechselseitige Annäherung durch Klemmwirkung zur Folge hat.

13. Einrichtung nach Anspruch 12, **dadurch gekennzeichnet,** daß mindestens eine (31) der Zungen an ihrem freien Ende mit einem Vorsprung (34) versehen ist, mit dem sie an der Wand des rohrförmigen Teils (11), das ihr zugeordnet ist, anliegt.

14. Einrichtung nach einem der Ansprüche 6 bis 13, **dadurch gekennzeichnet,** daß die Schraube (2) mit zwei identischen Paaren von biegsamen Zungen (31-32, 31'-32') versehen ist, die symmetrisch beiderseits ihrer Achse (XX') angeordnet sind.

15. Einrichtung nach einem der Ansprüche 6 bis 14, **dadurch gekennzeichnet,** daß der innere rohrförmige Gehäuseteil (11) eine Hülse bildet, in deren Innern eine Betätigungsmutter (9) drehend geführt und gegen Verschiebung gesichert ist, in welche die Einstellschraube (2) eingreift.

16. Einrichtung nach einem der Ansprüche 1 bis 5, **dadurch gekennzeichnet,** daß die elastisch verformbaren Elemente aus einer Einheit (6) aus vier identischen biegsamen Ansätzen (60) mit quadratischem Querschnitt bestehen, die das freie Ende der Schraube (5) in etwa parallel zu ihrer Achse (XX') und symmetrisch im Verhältnis zu dieser verlängern, wobei die Innenflächen dieser Ansätze (60) durch Zwischenräume (64) getrennt sind, die ihre wechselseitige Annäherung durch elastisches Biegen ermöglichen.

17. Einrichtung nach Anspruch 16, **dadurch gekennzeichnet,** daß die Wand (7) des Gehäuses einen rohrförmigen Teil (70) mit annähernd quadratischem Querschnitt umfaßt, in den mit Biegebeanspruchung die Einheit (6) von Ansätzen (60) eingreift.

18. Einrichtung nach Anspruch 17, **dadurch gekennzeichnet,** daß die Innenfläche des rohrförmigen Teils (70) mit einer Reihe von Längsstegen (72) versehen ist, die an den Ansätzen (60) zur Auflage kommen.

19. Einrichtung nach Anspruch 18, **dadurch gekennzeichnet,** daß an jeder Ecke des rohrförmigen Teils ein Paar Stege (72) vorgesehen ist, die jeweils an einer der Seiten der Ecke im gleichen Abstand von dieser angeordnet und angepaßt sind, um an den beiden Außenflächen des gleichen Ansatzes (60) anzuliegen.

20. Einrichtung nach einem der Ansprüche 16 bis 19, **dadurch gekennzeichnet,** daß die vier Ansätze (60) zu ihren freien Enden hin, symmetrisch im Verhältnis zur Achse (XX') der Schraube, leicht auseinanderlaufen.

21. Einrichtung nach einem der Ansprüche 16 bis 20, **dadurch gekennzeichnet,** daß die Außenflächen der Ansätze (60) an ihrem freien Ende abgekantet sind.

22. Einrichtung nach einem der Ansprüche 16 bis 21, **dadurch gekennzeichnet,** daß die Außenkanten der Ansätze (60) abgeschrägt sind.

23. Einrichtung nach einem der Ansprüche 17 bis 19, **dadurch gekennzeichnet,** daß der rohrförmige Teil (70) in einen hülsenförmigen Teil (73) mündet, in dessen Innern eine Betätigungsmutter (8) drehend geführt und gegen Verschiebung gesichert ist, in welche die Einstellschraube (5) eingreift.
